# EUROPÄISCHE PATENTSCHRIFT

(11) **EP 3 148 740 B1**
(45) Veröffentlichungstag und Bekanntmachung des Hinweises auf die Patenterteilung: **14.03.2018**
(21) Anmeldenummer: 15747387.7
(22) Anmeldetag: 01.06.2015
(51) Int. Cl.: B23P 19/04, B25J 9/16, B25J 15/00, B62D 25/24

(54) **STOPFENSETZWERKZEUG**
PLUG SETTING TOOL
OUTIL DE POSE DE BOUCHONS

(30) Priorität: 02.06.2014 DE 202014102558 U
(43) Veröffentlichungstag der Anmeldung: 05.04.2017
(73) Patentinhaber: KUKA Systems GmbH, 86165 Augsburg (DE)
(72) Erfinder: MAYR, Stefan, 86316 Friedberg (DE); KARA, Yücel, 86179 Augsburg (DE); STOCKSCHLÄDER, Julian, 86152 Augsburg (DE); ZUNKE, Richard Dr., 86150 Augsburg (DE)
(74) Vertreter: Ernicke, Moritz
(86) Internationale Anmeldenummer: PCT/EP2015/062123
(87) Internationale Veröffentlichungsnummer: WO 2015/185491

(56) Entgegenhaltungen:
- DE-A1-102010 005 798
- DE-A1-102010 010 718
- JP-A- H11 151 625
- JP-A- 2006 218 615
- US-A1- 2011 209 320

## Beschreibung

Die Erfindung betrifft ein Stopfensetzwerkzeug mit den Merkmalen im Oberbegriff des Hauptanspruchs.

Eine Einrichtung zum automatischen Setzen von Stopfen an Karosserieteilen ist aus der DE 10 2010 005 798 A1 bekannt. Die Stopfensetzeinrichtung umfasst einen mehrachsigen Industrieroboter mit einem Stopfensetzwerkzeug, das mit einem Stopfenmagazin und einer Setzeinheit mit einer drehbaren Stopfenaufnahme ausgestattet ist. Die Stopfenaufnahme kann zwischen einer Ladestellung zur Aufnahme eine Stopfens und einer Setzstellung zur Setzen des Stopfens an einer Karosserieöffnung geschwenkt werden.

Es ist Aufgabe der vorliegenden Erfindung, eine verbesserte Stopfensetztechnik aufzuzeigen.

Die Erfindung löst diese Aufgabe mit den Merkmalen im Hauptanspruch.

Die Stopfensetztechnik, d.h. das Stopfensetzwerkzeug und das zugehörige Verfahren, haben Vorteile hinsichtlich der Leistungsfähigkeit, Funktionalität und Präzision.

Das Stopfensetzwerkzeug kann von einer taktilen Handhabungseinrichtung, insbesondere einem taktilen Industrieroboter, an das Werkstück zugestellt werden. Die Vorschubbewegung und die Kraft zum Setzen eines Stopfens wird vom Industrieroboter aufgebracht. Dies bietet eine höhere Präzision und reduziert den Bauaufwand. Ein eigenständiger Setzantrieb in der Stopfenaufnahme wie bei der DE 10 2010 005 798 A1 ist entbehrlich. Andererseits kann der Industrieroboter auch zum Suchen der Werkstücköffnung und zum Ausrichten des Stopfensetzwerkzeugs benutzt werden.

Außerdem ist es bei der beanspruchten Stopfensetztechnik möglich, eine Stopfenaufnahme mit mehreren Aufnahmestellen für Stopfen einzusetzen. Zudem können der Ladevorgang und der Setzvorgang zeitlich überschnitten werden. Dies verkürzt die Prozesszeit und erhöht die Leistungsfähigkeit des Stopfensetzwerkzeugs.

Die beanspruchte Stopfensetztechnik hat ferner Vorteile für die Qualität und Sicherheit des Setzprozesses. Der aufgenommene Stopfen kann im Stopfenköcher mittels einer Steuer- und Begrenzungseinrichtung leicht vorgespannt werden. Dies sichert zum einen seine Lage und ermöglicht andererseits, mit dem Stopfen die Werkstücköffnung zu suchen und tastend zu erfassen.

Die beanspruchte Ausbildung der Stopfenaufnahme, insbesondere des gestellfesten Setzstößels und des relativ hierzu ausweichfähigen Stopfenköchers haben außerdem Vorteile für die sichere Übergabe des Stopfens an die Werkstücköffnung. Der Stopfen verlässt funktionsgerecht den Stopfenköcher und wird auch beim Rückzug des Stopfensetzwerkzeugs nicht wieder versehentlich mitgenommen. Günstig ist außerdem, dass mit der beanspruchten Stopfensetztechnik die beim Setzvorgang auftretenden Kräfte und Momente erfasst und zur Verifizierung des Prozessergebnisses und der Setzqualität ausgewertet werden können.

Das Stopfensetzwerkzeug ermöglicht ferner einen Wechsel eines Stopfenmagazins. Hierbei können im Rahmen eines modularen Aufbaus verschiedene Stopfenmagazine für unterschiedliche Stopfen am Stopfenwerkzeug aufgenommen werden. Am Stopfensetzwerkzeug können ein oder mehrere, ggf. unterschiedliche Stopfenmagazine angeordnet sein.

Hierdurch ist es möglich, mit einer großen Variantenbreite von Stopfen hinsichtlich deren Form und Größe wirtschaftlich zu arbeiten. Der Magazinwechsel kann automatisch erfolgen. Andererseits ist es auch möglich, am Stopfensetzwerkzeug mehrere Magazine mit gleichen oder unterschiedlichen Stopfenformaten unterzubringen. Durch die einheitliche Magazinaufnahme und den einheitlichen Aufnahmeadapter an den ansonsten unterschiedlichen Stopfenmagazinen kann die Variantenbreite beliebig vergrößert werden. Bei einem Wechsel des Stopfenformats kann mit dem gleichen Stopfensetzwerkzeug weitergearbeitet werden. Ein Werkzeugwechsel ist nicht erforderlich. Bedarfsweise kann ein Aufnahmekopf getauscht werden, insbesondere bei einer wesentlichen Änderung des Stopfenformats. Dies kann ebenfalls im Wege einer Adapterausbildung erfolgen, um einen automatischen Wechsel zu ermöglichen. Ferner ist es möglich, die Stopfenaufnahme mit unterschiedlichen Aufnahmeköpfen für divergierende Stopfen auszurüsten.

Die beanspruchte Ausbildung des Stopfenmagazins und der Ladeeinrichtung haben Vorteile für die sichere Abgabe eines einzelnen Stopfens an die Stopfenaufnahme, insbesondere den Stopfenköcher. Eine Vorschubeinrichtung, die vorzugsweise dem Stopfenmagazin zugeordnet ist, ermöglicht eine Relativbewegung zwischen Stopfenaufnahme und Stopfenmagazin, sodass die Stopfenaufnahme ungehindert zwischen der Lade- und Setzstellung drehen kann. Andererseits kann über diese Relativbewegung auch eine bevorzugt formschlüssige Dreharretierung der Stopfenaufnahme erreicht werden. Hierdurch wird die Stopfenaufnahme beim Setzvorgang drehfest gehalten und in ihrer Lage und Ausrichtung gesichert.

Für die Antriebe der Werkzeugkomponenten, insbesondere der Dreheinrichtung, der Vorschubeinrichtung und der Ladeeinrichtung ist es vorteilhaft, elektrische und steuerbare bzw. regelbare Antriebe bzw. Elektromotoren einzusetzen. Dies ist für die Steuerung und Überwachung des Setzprozesses und auch des Ladevorgangs von Vorteil.

Das Stopfensetzwerkzeug hat ferner den Vorteil einer kleinen Baugröße, was insbesondere beim Setzen von Stopfen an schwer zugänglichen Karosseriestellen zum Tragen kommt. Ein weiterer Vorteil ist der geringe Bau- und Steueraufwand. Das Stopfensetzwerkzeug kommt mit wenigen beweglichen Teilen und Antrieben aus.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Stopfensetzeinrichtung mit einem taktilen Roboter und einem Stopfensetzwerkzeug,
- Figuren 2 bis 4:: das Stopfensetzwerkzeug von Figur 1 in verschiedenen Ansichten,
- Figur 5:: eine abgebrochene und vergrößerte Seitenansicht einer Setzeinrichtung des Stopfensetzwerkzeugs,
- Figur 6 und 7:: verschiedene Ausführungen eines Stopfenköchers einer Stopfenaufnahme,
- Figur 8 und 9:: verschiedene perspektivische Ansichten eines Stopfenmagazins,
- Figur 10:: eine Draufsicht auf das Stopfenmagazin und
- Figur 11:: einen Längsschnitt durch das Stopfenmagazin gemäß Schnittlinie XI-XI von Figur 10.

Die Erfindung betrifft ein robotergeführtes Stopfensetzwerkzeug (3) und ein Stopfensetzverfahren. Sie betrifft ferner eine Stopfensetzeinrichtung (1).

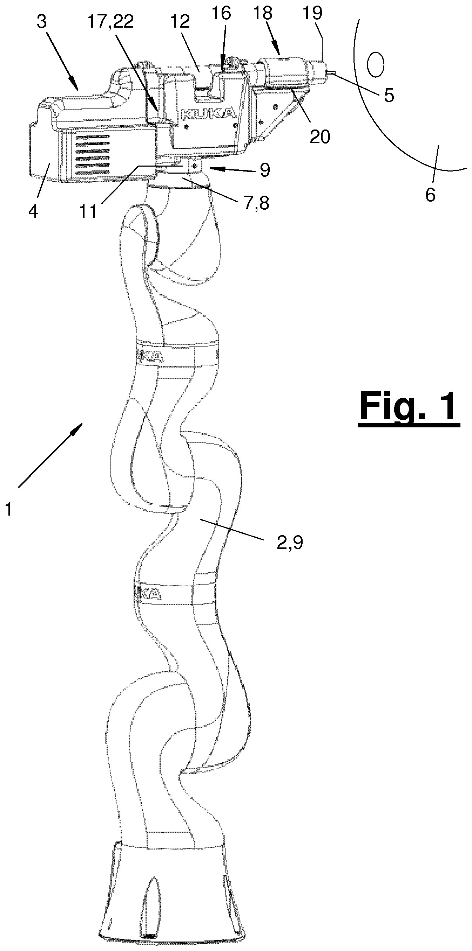

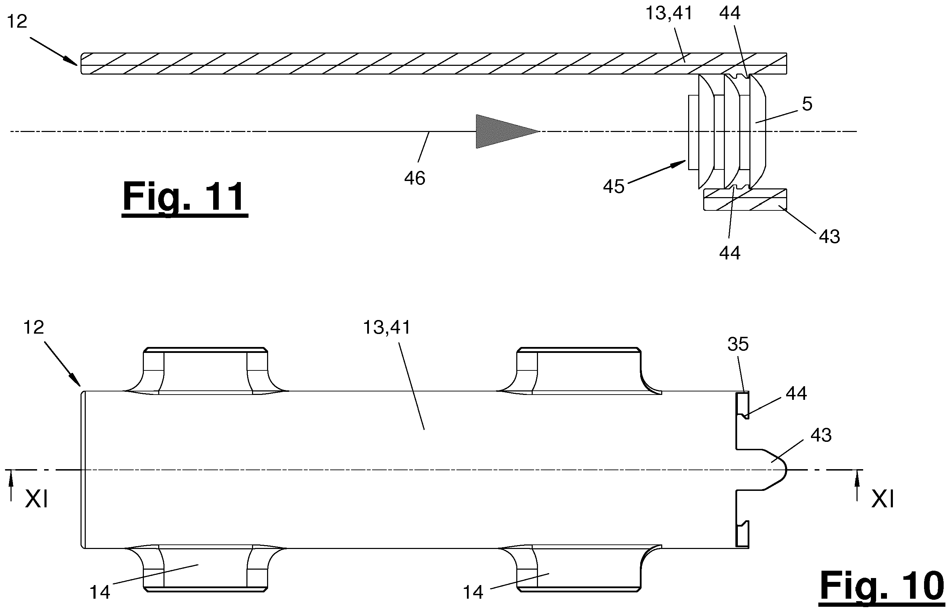

Das robotergeführte Stopfensetzwerkzeug (3) dient zum automatischen Setzen von Stopfen (5) an Werkstücken (6), insbesondere Karosserieteilen, wie sie in Figur 1 schematisch angedeutet sind. Der Stopfen (5) wird dabei in eine Öffnung am Werkstück (6) eingesetzt und unter Bildung einer Klemm- oder Rastverbindung eingedrückt. Die Raumlage der Öffnung ist bekannt und kann direkt angefahren werden. Andererseits ist es auch möglich, mit dem Stopfensetzwerkzeug (3) bzw. der Stopfensetzeinrichtung (1) die Werkstücköffnung zu suchen. Dies reduziert den Programmieraufwand und erhöht die Flexibilität. In Figur 11 ist ein Stopfen (5) bespielhaft dargestellt.

Die Stopfensetzeinrichtung (1) weist einen mehrachsigen Industrieroboter (2) und ein vom Roboter geführtes Stopfensetzwerkzeug (3) auf. Statt des bevorzugten Industrieroboters (2) kann eine beliebige andere mehrachsige Handhabungseinrichtung eingesetzt werden. Figur 1 zeigt beispielhaft die Ausgestaltung mit einem Industrieroboter (2).

Der Industrieroboter (2) ist mehrgliedrig ausgebildet und besitzt mehrere steuerbare und regelbare Roboterachsen. Er kann dabei eine beliebige Zahl und Kombination von rotatorischen und/oder translatorischen Roboterachsen haben. Der in Figur 1 gezeigte Industrieroboter (1) hat sieben Roboterachsen und vier Roboterglieder einschließlich einer Basis, zwei Zwischengliedern und einem Endglied oder Abtriebsglied (7), welches ein bewegliches, insbesondere rotierendes Abtriebselement (8) in Form eines Flansches oder dergleichen aufweist. Die Zwischenglieder des Industrieroboters (1) können eine abgewinkelte Form haben und mittels einer integrierten Roboterachse in sich um ihre Längserstreckung verdrehbar sein. Statt der gezeigten Anordnung sind beliebig andere Roboterkonfigurationen möglich. Der Industrieroboter (2) kann stationär oder instationär angeordnet sein. Bei einer instationären Anordnung kann der Industrieroboter (2) eine Fahrachse aufweisen oder auf einem ggf. mehrachsig im Raum beweglichen Fahrzeug angeordnet sein.

Der Industrieroboter (1) hat taktile Eigenschaften und weist eine entsprechende Sensorik (9) auf, die von außen einwirkende Belastungen, insbesondere Kräfte und/oder Momente erfasst und auswertet. Bei der gezeigten Roboteranordnung kann die Sensorik (9) in den Industrieroboter (2) integriert sein, wobei sich z.B. Momentensensoren an den rotatorischen Roboterachsen und deren Lagerungen befinden. Außerdem sind hier Weggeber, insbesondere Drehgeber, angeordnet. Alternativ oder zusätzlich kann eine Belastungen aufnehmende Sensorik im Abtriebsbereich des Industrieroboters (2) angeordnet sein, z.B. zwischen dem Abtriebselement (8) und dem Stopfensetzwerkzeug (3).

Der mehrachsige Industrieroboter (1) ist vorzugsweise als Gelenkarmroboter oder als Kickarmroboter ausgebildet. Er ist programmierbar und weist eine Robotersteuerung (nicht dargestellt) auf, an die auch das Stopfensetzwerkzeug (3) angeschlossen sein kann.

Ferner kann für das Stopfensetzwerkzeug (3) eine Betriebsmittelzuführung für die erforderlichen Betriebsmittel, z.B. elektrische Signal- und/oder Leistungsströme, Fluide, insbesondere Druckluft, Kühlmittel oder dergleichen, vorhanden sein. Die Betriebsmittelzuführung kann von außen oder intern durch die Roboterglieder erfolgen. Am Abtriebselement (8) kann hierfür eine geeignete Kupplung angebaut sein, die z.B. als Medienkupplung ausgebildet ist und die ggf. auch einen automatischen Werkzeugwechsel ermöglicht.

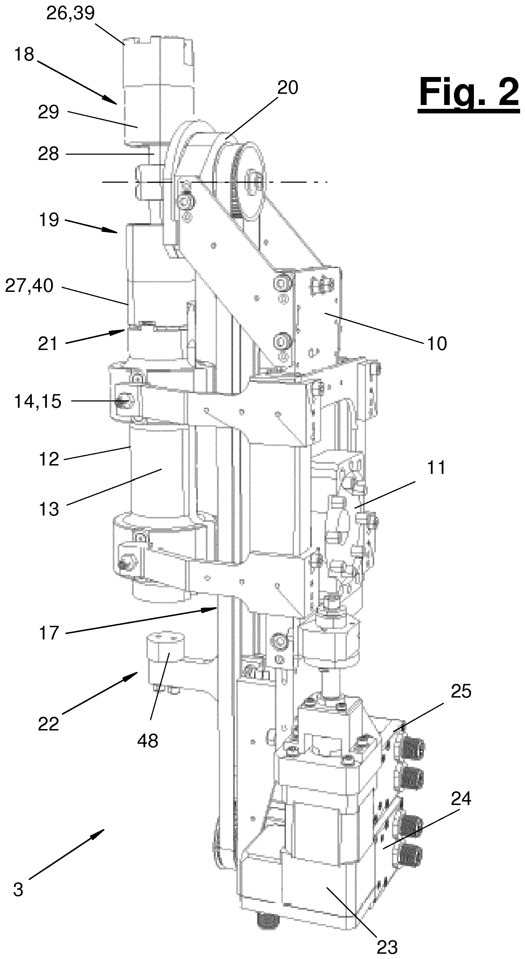

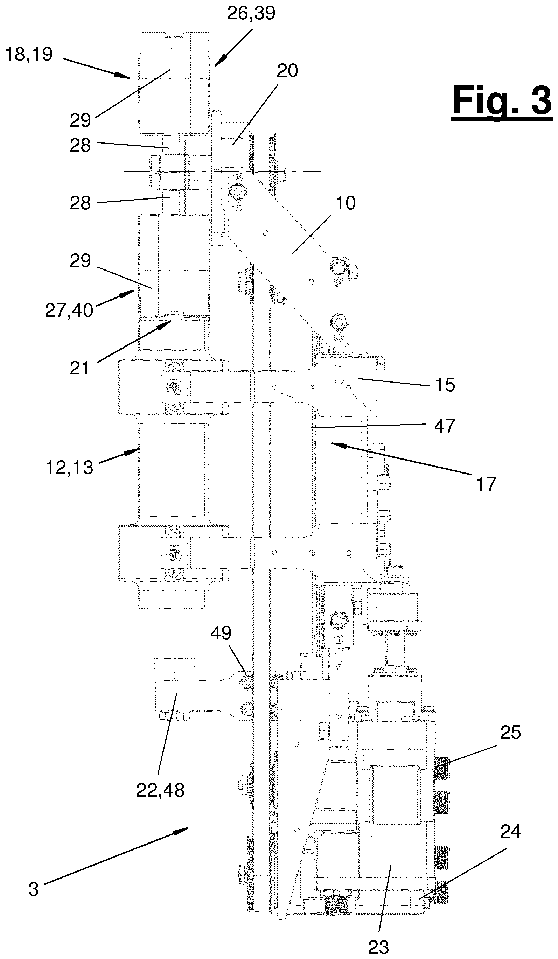

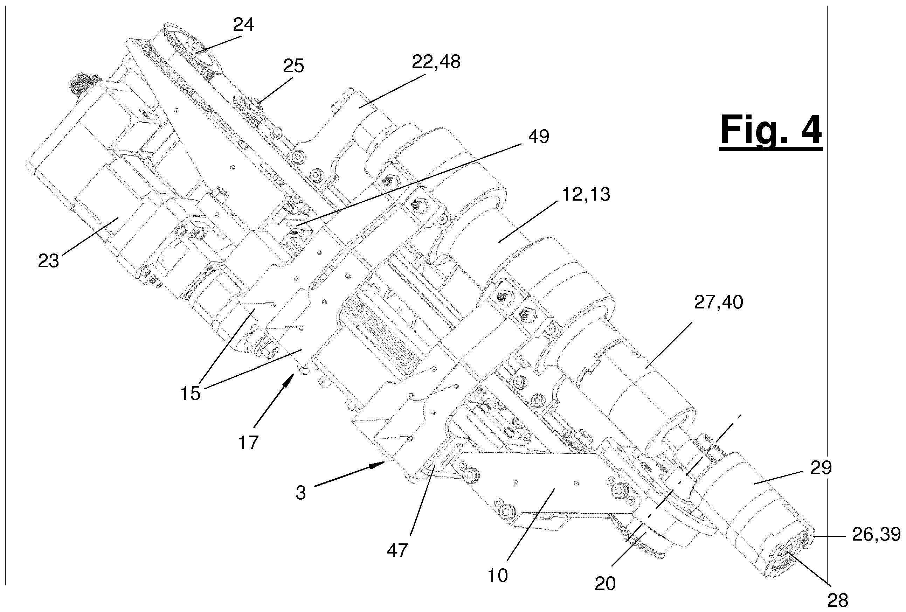

In Figur 1 ist das Stopfensetzwerkzeug (3) mit einem umgebenden Gehäuse (4) dargestellt. Wie Figur 2 bis 4 ohne das Gehäuse verdeutlichen, weist das Stopfensetzwerkzeug (3) ein Gestell (10) mit einem Anschluss (11) zur Verbindung mit dem Roboter (2) und dessen Abtriebselement (8) auf. Ferner beinhaltet das Stopfensetzwerkzeug (3) ein Stopfenmagazin (12) und eine Setzeinheit (18). Beide können bedarfsweise einzeln oder mehrfach vorhanden sein. Die Setzeinheit (18) weist eine Stopfenaufnahme (19) und eine Dreheinrichtung (20) zur Erzeugung einer gesteuerten Drehbewegung der Stopfenaufnahme (19) um eine Drehachse auf, die in Figur 2 bis 5 dargestellt ist. Die Drehachse ist quer zur Längsachse des bevorzugt stangenförmig oder zylindrischen Stopfenmagazin (12) ausgerichtet. Die Achsen können sich schneiden.

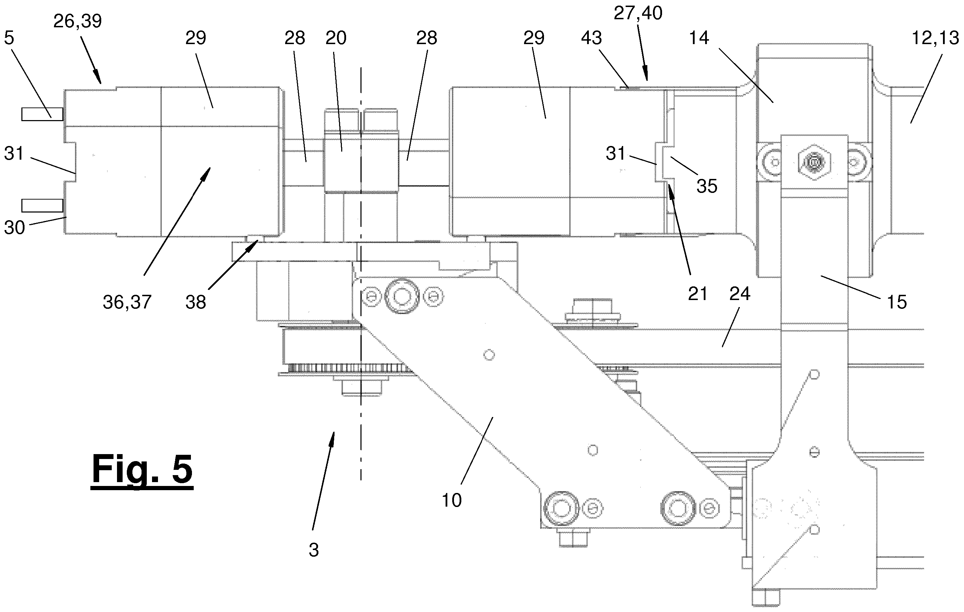

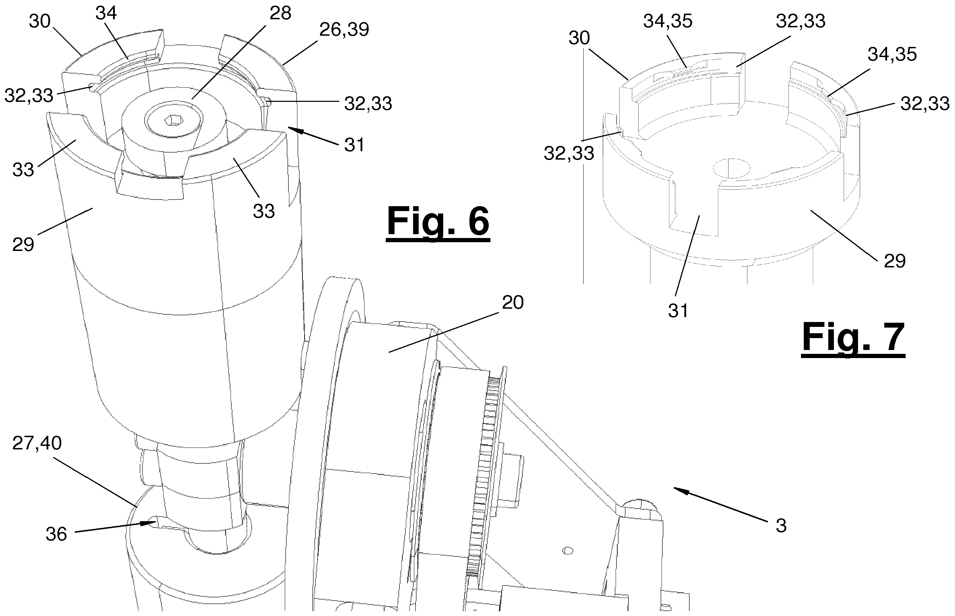

Die Stopfenaufnahme (19) weist einen oder mehrere mit der Dreheinrichtung (20) verbundene Aufnahmeköpfe (26,27) auf. Diese können untereinander gleich oder unterschiedlich ausgebildet sein. Sie sind jeweils mit einem gestellfesten Setzstößel (28) und einem Stopfenköcher (29) zur Aufnahme eines einzelnen Stopfens (5) ausgerüstet. Figur 6 zeigt diese Anordnung. Der Setzstößel (28) ist in seiner Axialrichtung gestellfest abgestützt. Der oder die Setzstößel (28) sind quer, insbesondere radial, zur Drehachse der Dreheinrichtung (20) ausgerichtet. Sie sind vorzugsweise an der Dreheinrichtung (20), insbesondere an deren aufrechten Zapfen, abgestützt. Figur 5 zeigt diese Anordnung.

In den gezeigten Ausführungsformen hat die Stopfenaufnahme (19) zwei Aufnahmeköpfe (26,27), die einander diametral zur Drehachse der Dreheinrichtung (20) gegenüberliegen. Deren Setzstößel (28) fluchten miteinander. In den gezeigten Ausführungsbeispielen befindet sich jeweils der eine Aufnahmekopf (26) in der Setzstellung (39) und der andere Aufnahmekopf (27) in der Ladestellung (40).

Die Stopfenköcher (29) der Aufnahmeköpfe (26,27) sind relativ zu ihrem Setzstößel (28) axial ausweichfähig gelagert. In den gezeigten Ausführungsbeispielen sind sie dazu auf dem Setzstößel (28) aufgesetzt und gelagert und können sich in seiner Axialrichtung bewegen. Die Stopfenköcher (29) haben hierfür die in Figur 6 und 7 dargestellte Form. Sie weisen einen Schaft und am vorderen Ende ein Köcherteil auf, welches topfartig ausgebildet ist und einen Boden sowie eine von dessen Rand in axialer Richtung abstehende Köcherwandung aufweist. Im Boden und im Schaft ist eine zentrale Durchgangsbohrung für den bevorzugt zylindrischen Setzstößel (28) angeordnet. Der Setzstößel (28) ragt gemäß Figur 6 in den hohlen Innenraum des Köcherteils.

Der Stopfenköcher (29) ist von einem in den Zeichnungen nur schematisch angedeuteten Rückstellelement (37), z.B. einer Druckfeder, beaufschlagt. Das Rückstellelement (37) wirkt in Axialrichtung und schiebt elastisch den Stopfenköcher (29) zum vorderen, freien Stößelende. Ferner ist eine Geradführung (36) zwischen Setzstößel (28) und Stopfenköcher (29) angeordnet.

Das frontseitige Köcherteil hat eine dem jeweiligen Stopfen (5) angepasste Querschnittsform. In den gezeigten Ausführungsbeispielen, insbesondere gemäß Figur 11, hat der Stopfen (5) in der Draufsicht eine rotationssymmetrische, insbesondere kreisrunde Form. Die Formgebung ist an die Werkstücköffnung angepasst und kann alternativ in der Draufsicht oval oder prismatisch ausgebildet sein. Der Stopfen (5) weist ein teller- oder kappenartiges Kopfteil zur Überdeckung der Werkstücköffnung und ein zur Stopfenarretierung geeignetes Fußteil auf. Dies kann ein oder mehrere quer vom Kopfteil abstehende Füße und eine für eine Rast- oder Schnappverbindung geeignete Kontur aufweisen. In Figur 11 ist das Fußteil ringförmig ausgebildet.

Gemäß Figur 6 und 7 weist der jeweilige Stopfenköcher (28) am vorderen Köcherrand (30) einen Stopfenhalter (32) auf, der an der Innenseite der Köcherwandung angeordnet ist. Dieser hält den Stopfen (5) in geeigneter Weise während des Lade- und Setzvorgangs fest, z.B. am Rand von dessen Kopfteil. In den gezeigten Ausführungsbeispielen ist der Stopfenhalter (32) als radial hinterschnittene Aufnahmenut für den besagten Stopfenrand ausgebildet. Dieser wird in der Nut formschlüssig festgehalten. Der vorzugsweise aus Kunststoff bestehende Stopfen (5) kann beim Setzen durch Verformung des Kopfteils aus dem Stopfenhalter (32) ausschnappen.

Gemäß Figur 6 und 7 ist der Stopfenhalter (32) in mehrere getrennte und umfangseitig distanzierte Halteabschnitte (33) unterteilt. Hierfür sind an der Köcherwandung eine oder mehrere axiale Ausnehmungen (31) vorhanden. Aus den Halteabschnitten bzw. Nutenabschnitten (33) kann der Stopfenrand leichter beim Setzvorgang ausschnappen.

Figur 6 und 7 verdeutlichen außerdem zwei Varianten für die Ausbildung des Stopfenhalters (32) bzw. der Aufnahmenut. Bei der Variante von Figur 6 ist die in Setzrichtung weisende vordere Stirnwand (34) der Aufnahmenut (32) in den Halteabschnitten (33) durchgehend vorhanden und überdeckt den Stopfenrand über die gesamte Länge des betreffenden Bogenabschnitts. In der Variante von Figur 7 ist die besagte vordere Stirnwand (34) der Aufnahmenut (32) an den Halteabschnitten (33) stellenweise unterbrochen und hat die Form von einem lokalen, insbesondere zentralen Vorsprung (35), der den Stopfenrand nur in einem Teilbereich der Bogenlänge des Halteabschnitts (33) übergreift. In den beidseits anschließenden Bogenabschnitten ist die Aufnahmenut (32) als radiale Stufe ausgebildet.

Die Stopfenaufnahme (19) weist eine in Figur 5 angedeutete Steuer- und Begrenzungseinrichtung (38) für die Axialbewegung der einen oder mehreren Stopfenköcher (28) in der Setz- und Ladestellung (39,40) auf. Die Steuer- und Begrenzungseinrichtung (38) kann z.B. eine oder mehrere Kurvenscheiben und ggf. auch hochragende Stifte aufweisen. In der Ladestellung (40) arretiert die Steuer- und Begrenzungseinrichtung (38) den Stopfenköcher (29). Er kann dadurch beim Einsetzen bzw. Laden eines Stopfens (5) nicht unerwünscht zurückgeschoben werden. In der Setzstellung (39) spannt die Steuer- und Begrenzungseinrichtung (38) den Stopfen (5) vor. Der Stopfen (5) kann sich dabei leicht nach außen stülpen und ragt über den vorderen Köcherrand (30) hinaus. Der vorstehende Stopfen (5) kann zum sensitiven Suchen und Ertasten des Werkstücklochs benutzt werden. Außerdem kann die rückwärtige Ausweichbewegung des Stopfenköchers (29) mit der besagten Einrichtung (38) begrenzt werden.

Beim Setzen eines Stopfens (5) wird zunächst ein Stopfen (5) vereinzelt und in den in Ladestellung (40) befindlichen Stopfenköcher (29) geladen. Anschließend dreht der betreffende Aufnahmekopf mit dem Stopfenköcher (29) um 180° in die Setzstellung (39). Der taktile Industrieroboter (2) positioniert dann mittels einer programmierten Bahnbewegung und ggf. auch mit einem Suchvorgang den Stopfen (5) mit seinem Fußteil über der Werkstücköffnung und führt anschließend eine Vorschubbewegung durch, die längs des gestellfesten Setzstößels (28) und in der Regel in der Normalenrichtung zur Werkstückoberfläche bzw. zur Werkstücköffnung gerichtet ist.

Der Fußteil des Stopfens (5) wird in der ersten Phase in die Werkstücköffnung eingeführt und über den weiteren Vorschubweg verformt. Dies äußert sich in einem Kraftanstieg, der mit der Sensorik (9) detektiert wird. Der gespannte Stopfen (5) verhält sich wie eine mechanische Feder, wobei der Kraftanstieg über den Zustellweg linear sein kann. Die Steigung ist stopfenspezifisch. Falls sich kein Stopfen (5) im Stopfenköcher (29) befindet, wird dies durch das Fehlen eines Kraftanstiegs bei der Vorschubbewegung erkannt.

In der zweiten Phase schnappt der Stopfen (5) mit seinem Fußteil in die Werkstücköffnung ein. Dementsprechend fällt beim Vorschub die Kraft ab. Der Kraftabfall ist vom jeweiligen Stopfen (5) abhängig. Falls der Stopfen (5) nicht in der vorgesehenen Weise in der Öffnung einschnappt, ist er nicht gesetzt, was durch Fehlen des in der entsprechenden Vorschubposition erwarteten Kraftverlaufs detektiert werden kann.

In der dritten Phase steigt die Axialkraft nach dem Einschnappen rapide an. Nach einem bestimmten weiteren Vorschubweg muss eine vorgegebene und vorbestimmte Kraft erreicht sein. Andernfalls ist der Stopfen (5) unzulässig verformt und z.B. durchgedrückt. Durch eine Überwachung der Vorschubpositionen und der Kräfte kann somit der Stopfensetzprozess gesteuert, kontrolliert und hinsichtlich der Ergebnisse und der erreichten Qualität verifiziert werden.

Bei diesem Setzprozess wird die Vorschubkraft des Industrieroboters (2) über den gestellfesten Setzstößel (28) auf den Stopfen (5), insbesondere dessen Kopfteil, übertragen. Bei dieser Vorschubbewegung stößt der Stopfenköcher (29) mit dem vorderen Köcherrand (30) am Werkstück (6) an und weicht bei fortgesetzter Vorschubbewegung in Gegenrichtung federnd aus. Der vom Setzstößel (28) vorgeschobene Stopfen (5) schnappt dabei mit seinem Stopfenrand aus dem Stopfenhalter (32). Diese Ausschnappbewegung wird durch die in Figur 7 gezeigte Formgebung des Stopfenhalters (32) besonders gut und wirksam unterstützt.

Während des Setzvorgangs eines Stopfens (5) kann neuer Stopfen (5) in die Stopfenaufnahme (19) geladen werden. Zwischen der Stopfenaufnahme (19) und dem Stopfenmagazin (12) erfolgt eine axiale Relativbewegung mittels einer Vorschubeinrichtung (17). Diese ist vorzugsweise dem Stopfenmagazin (12) zugeordnet, wobei alternativ eine andere Zuordnung möglich ist. Bei dieser Relativbewegung werden das Stopfenmagazin (12) und der in Ladestellung (40) befindliche Aufnahmekopf (27) aneinander angenähert, sodass mittels einer Ladeeinrichtung (22) der vordere Stopfen (5) aus dem Stopfenmagazin (12) ausgetrieben werden kann und vom Stopfenköcher (29) aufgenommen und mittels des Stopfenhalters (32) formschlüssig gehalten wird.

Bei dieser Vorschubbewegung erfolgt eine gegenseitige Annäherung von Stopfenmagazin (12) und Aufnahmekopf (27) bzw. Stopfenköcher (29), wodurch sich zum einen der Übergabeweg für den Stopfen (5) verkürzt und außerdem eine randseitige Stopfenführung erfolgt. Andererseits kann hierdurch auch eine Dreharretierung (21) für die Stopfenaufnahme (19) gebildet werden. Hierfür ist kein eigener oder weiterer Aktor erforderlich. Das Stopfenmagazin (12), insbesondere dessen Stopfenbehälter (13), weist am vorderen Rand mehrere axiale Vorsprünge (35,43) auf, die in die axial fluchtend gegenüberstehenden Ausnehmungen (31) am Stopfenköcher (29) formschlüssig eingreifen. Die Drehstellung der Stopfenaufnahme (19) wird dadurch während des Setzvorgangs fixiert. Der Lade- und der Setzvorgang können gleichzeitig erfolgen, wobei anschließend die besagte Relativbewegung in Gegenrichtung erfolgt. Hierbei wird auch die Dreharretierung (21) gelöst, so dass die Stopfenaufnahme (19) erneut drehen kann.

Die Stopfen (5) sind gemäß Figur 10 und 11 in einem Behälter (13) des Stopfenmagazins (12) in einer Reihe hintereinander aufgenommen. Vorzugsweise hat der Stopfenbehälter (13) eine Stangen- oder Rohrform und kann insbesondere zylindrisch ausgebildet sein. Er ist längs der Setzrichtung und quer zur Abtriebsachse des Abtriebselements (8) ausgerichtet.

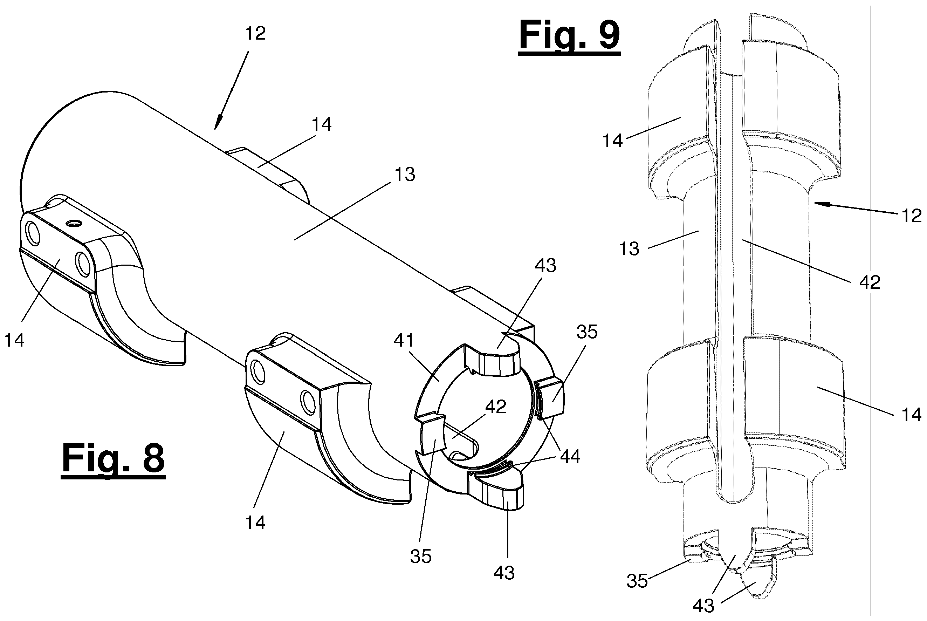

Der bevorzugt zylindrische Stopfenbehälter (13) hat gemäß Figur 8 und 9 offene Stirnseiten und weist im Behältermantel (41) einen axialen Schlitz (42) auf, der sich vom rückwärtigen Behälterrand in Axialrichtung zur Dreheinrichtung (20) hin erstreckt und mit Abstand vor dem anderen Stirnende endet. Durch den Schlitz (42) kann die Ladeeinrichtung (22) von der Behälterrückseite her eintauchen und die im Behälter (13) aufgenommene Stopfenreihe (45) nach vorn schieben.

Wie Figur 10 und 11 verdeutlichen, sind am vorderen Endbereich des Stopfenbehälters (13) ein oder mehrere radial nach innen weisende Rückhalteelemente (44) für die Stopfen (5) angeordnet. Sie halten die vorderen Stopfen (5) in der Reihe in Position und sorgen für eine Vereinzelung des vorderen Stopfens (5) beim Ladevorgang unter rückwärtiger Einwirkung der Ladeeinrichtung (22). Die Rückhalteelemente (44) können am Behälter (41) und an den Vorsprüngen (35,43) angeordnet sein. Die Rückhalteelemente (44) sind an die jeweilige Stopfengeometrie angepasst und haben z.B. die Form von punktweise angeordneten und angeschrägten Nasen. Die Zahl und Anordnung sowie die Ausbildung der Rückhalteelemente (44) kann variieren.

Die Ladeeinrichtung (22) hat einen auf das Stopfenmagazin (12) einwirkenden und insbesondere in den Behälterinnenraum einführbaren beweglichen Ladestößel (48). Dieser ist mit einer Führung (49), z.B. einer Schlittenführung, am Gestell (10) axial beweglich gelagert und wird von einem Antrieb (25) beaufschlagt. Der Antrieb (25) kann als Torque-Antrieb ausgebildet sein. Der Ladestößel (48) schiebt die Stopfenreihe (45) in der Förderrichtung (46) nach vorn.

Das Stopfensetzwerkzeug (3) ist vorzugsweise modular ausgebildet und kann verschiedene Stopfenmagazine (12) für unterschiedliche Stopfenformate aufnehmen. Es weist eine einheitliche Magazinaufnahme (15) für verschiedene Stopfenmagazine (12) auf, die bedarfsweise auch automatisch gewechselt werden können.

Die verschiedenen Stopfenmagazine (12) weisen einen an das jeweilige Stopfenformat angepassten Stopfenbehälter (13) auf. Dieser besitzt einen einheitlichen Aufnahmeadapter (14), der an die Magazinaufnahme (15) angepasst ist. Der einheitliche Aufnahmeadapter (14) hat bei den verschiedenen Stopfenmagazinen (12) jeweils die gleiche und bevorzugt äußere Aufnahmekontur, die an die einheitliche Magazinaufnahme (15) angepasst ist. Die mit der Stopfengeometrie variierenden Behälterformate werden über den Aufnahmeadapter (14) egalisiert. Der Aufnahmeadapter (14) kann z.B. als radial über den Behältermantel (41) ragender Ring oder Kragen ausgebildet sein.

Die Magazinaufnahme (15) und der Aufnahmeadapter (14) sind lösbar miteinander gekoppelt. Dies erfolgt vorzugsweise über eine formschlüssige Verbindung, insbesondere eine federnde Rastverbindung oder Clipsverbindung. Dies ist auch für den vorerwähnten automatischen Magazinwechsel von Vorteil. Durch die genannte Schnappverbindung erfolgt automatisch auch eine Positionierung des Stopfenmagazins (12) in der Magazinaufnahme (15).

Die Magazinaufnahme (15) ist von außen zugänglich am Stopfensetzwerkzeug (3) angeordnet. Sie ist für einen axialen Vorschub und Rückhub des Stopfenmagazins (12) mit der Vorschubeinrichtung (17) verbunden. Letztere weist eine Führung (47), insbesondere einen Schlitten, mit einem Antrieb (23) auf.

Die Stopfensetzeinrichtung (1) kann für den automatischen Magazinwechsel eine entsprechende stationäre Bereitstellung für ein oder mehrere Stopfenmagazine (12) sowie entsprechende Hilfseinrichtungen für den Magazinwechsel aufweisen. Diese sind der Übersichtlichkeit halber nicht dargestellt. Der Industrieroboter (2) bewegt auf einer programmierten Bahn das Stopfensetzwerkzeug (3) zu dieser Bereitstellung und positioniert es mit der Öffnung (16) gegenüber der besagten Hilfseinrichtung.

Die Dreheinrichtung (20), die Ladeeinrichtung (22) und die Vorschubeinrichtung (17) haben jeweils einen geeigneten Antrieb (23,24,25). Dieser ist in den gezeigten Ausführungsbeispielen als elektrischer Antrieb mit einem entsprechend steuer- oder regelbaren Elektromotor ausgebildet. Ferner ist ein entsprechendes Getriebe, z.B. einem Zahnriementrieb, zur Kraft- und Bewegungsübertragung vorhanden. Die besagten elektrischen Antriebe (23,24,25) sind am rückwärtigen Werkzeugbereich untergebracht.

Die Antriebe (23,24,25) sind mit der Robotersteuerung in geeigneter Weise, z.B. leitungsgebunden oder drahtlos, verbunden und werden von der Robotersteuerung ggf. in Abstimmung mit den Roboterbewegungen, angesteuert. Alternativ kann das Stopfensetzwerkzeug (3) eine eigene integrierte Steuerung aufweisen. Daneben sind andere Abwandlungen der Steuerungsarchitektur möglich.

Abwandlungen der gezeigten und beschriebenen Ausführungsbeispiele sind in verschiedener Weise möglich. Insbesondere können die Merkmale der Ausführungsbeispiele beliebig miteinander kombiniert und ggf. auch vertauscht werden. Das Stopfensetzwerkzeug (3) und die Stopfensetzeinrichtung (1) können eine Mensch-Roboter-Kooperation oder -Kollaboration (MRK) geeignete Ausbildung haben.

Die Stopfenaufnahme (19) hat in der gezeigten Ausführungsform zwei Aufnahmestellen für einen Stopfen (5), sodass gleichzeitig vorne ein Stopfen (5) gesetzt und hinten ein neuer Stopfen (5) nachgeladen werden kann. Alternativ kann die Zahl der Aufnahmestellen der Stopfenaufnahme (19) kleiner oder größer sein. Sie kann z.B. eins, drei, vier oder fünf oder mehr betragen.

In der gezeigten und bevorzugten Ausführungsform ist die Stopfenaufnahme (19) im Setzbetrieb fluchtend mit dem Stopfenmagazin (12) ausgerichtet. Alternativ kann auch eine andere Winkellage realisiert werden, insbesondere, wenn die Stopfenaufnahme (19) mehrere Aufnahmestellen hat und/oder am Stopfensetzwerkzeug (3) mehrere Stopfenmagazine (12) angeordnet sind.

Die Stopfenaufnahme (19) kann für einen automatischen Tausch bei Wechsel des Stopfenformats ebenfalls einen Adapter (nicht dargestellt) aufweisen. Dieser kann z.B. am vorderen Bereich des Stopfenköchers (29) bzw. Köcherrands (30) angeordnet sein. Die verschiedenen Adapter beinhalten jeweils einen anderen angepassten Stopfenhalter (32). Der Setzstößel (28) kann gleich bleiben oder ebenfalls einen angepassten und automatisch wechselbaren Stößelkopf aufweisen.

### BEZUGSZEICHENLISTE

- 1: Stopfensetzeinrichtung
- 2: Industrieroboter
- 3: Stopfensetzwerkzeug
- 4: Gehäuse, Schutzhülle
- 5: Stopfen
- 6: Werkstück, Karosserie
- 7: Abtriebsglied, Roboterhand
- 8: Abtriebselement
- 9: Sensorik
- 10: Gestell
- 11: Anschluss
- 12: Stopfenmagazin
- 13: Stopfenbehälter
- 14: Aufnahmeadapter
- 15: Magazinaufnahme
- 16: Öffnung
- 17: Vorschubeinrichtung
- 18: Setzeinheit
- 19: Stopfenaufnahme
- 20: Dreheinrichtung
- 21: Dreharretierung
- 22: Ladeeinrichtung
- 23: Antrieb Vorschubeinrichtung
- 24: Antrieb Dreheinheit
- 25: Antrieb Ladeeinrichtung
- 26: Aufnahmekopf
- 27: Aufnahmekopf
- 28: Setzstößel
- 29: Stopfenköcher
- 30: Köcherrand
- 31: Ausnehmung
- 32: Stopfenhalter, Aufnahmenut
- 33: Halteabschnitt, Nutenabschnitt
- 34: Stirnwand der Aufnahmenut
- 35: Vorsprung
- 36: Geradführung
- 37: Rückstellelement, Feder
- 38: Begrenzungseinrichtung
- 39: Setzstellung
- 40: Ladestellung
- 41: Behältermantel
- 42: Schlitz
- 43: Vorsprung
- 44: Rückhalteelement
- 45: Stopfenreihe
- 46: Förderrichtung von Stopfen
- 47: Führung, Schlitten von Magazinaufnahme
- 48: Ladestößel
- 49: Führung, Schlitten von Ladestößel

## Patentansprüche

1. Robotergeführtes Werkzeug (3) zum automatischen Setzen von Stopfen (5) an Werkstücken (6), insbesondere Karosserieteilen, wobei das Stopfensetzwerkzeug (3) ein Gestell (10) mit einem Anschluss (11) für einen Industrieroboter (2), ein Stopfenmagazin (12) und eine Setzeinheit (18) mit einer Stopfenaufnahme (19) und einer Dreheinrichtung (20) zur Verstellung der Stopfenaufnahme (19) zwischen einer Ladestellung (40) am Stopfenmagazin (12) und einer Setzstellung (39) aufweist, **dadurch gekennzeichnet, dass** die Stopfenaufnahme (19) einen oder mehrere mit der Dreheinrichtung (20) verbundene Aufnahmeköpfe (26,27) mit jeweils einem Setzstößel (28) und einem Stopfenköcher (29) zur Aufnahme eines einzelnen Stopfens (5) aufweist, wobei der Setzstößel (28) in seiner Axialrichtung gestellfest abgestützt und der Stopfenköcher (29) relativ zum Setzstößel (28) axial ausweichfähig gelagert ist.

2. Stopfensetzwerkzeug nach Anspruch 1, **dadurch gekennzeichnet, dass** der oder die Setzstößel (28) quer, insbesondere radial, zur Drehachse der Dreheinrichtung (20) ausgerichtet und an der Dreheinrichtung (20) abgestützt sind.

3. Stopfensetzwerkzeug nach Anspruch 1 oder 2, **dadurch gekennzeichnet, dass** die Stopfenaufnahme (19) eine Steuer- und Begrenzungseinrichtung (38) für die Axialbewegung des oder der Stopfenköcher (28) in der Setz- und Ladestellung (39,40) aufweist.

4. Stopfensetzwerkzeug nach Anspruch 1, 2 oder 3, **dadurch gekennzeichnet, dass** der jeweilige Stopfenköcher (28) am vorderen Köcherrand (30) einen Stopfenhalter (32) aufweist.

5. Stopfensetzwerkzeug nach Anspruch 4, **dadurch gekennzeichnet, dass** der Stopfenhalter (32), insbesondere in einer Ausbildung als radial hinterschnittene Aufnahmenut, in mehrere getrennte und umfangseitig distanzierte Halteabschnitte (33) unterteilt ist.

6. Stopfensetzwerkzeug nach einem der vorhergehenden Ansprüche, **dadurch gekennzeichnet, dass** der jeweilige Stopfenköcher (28) auf seinem Setzstößel (28) axial verschieblich gelagert und von einem Rückstellelement (37) beaufschlagt ist.

7. Stopfensetzwerkzeug nach einem der vorhergehenden Ansprüche, **dadurch gekennzeichnet, dass** das Stopfensetzwerkzeug (3) eine Magazinaufnahme (15) zur lösbaren Aufnahme eines Stopfenmagazins (12) aufweist.

8. Stopfensetzwerkzeug nach einem der vorhergehenden Ansprüche, **dadurch gekennzeichnet, dass** das Stopfensetzwerkzeug (3) eine Vorschubeinrichtung (17) für eine axiale Relativbewegung zwischen der Stopfenaufnahme (19) und dem Stopfenmagazin (12) aufweist.

9. Stopfensetzwerkzeug nach Anspruch 8, **dadurch gekennzeichnet, dass** das Stopfensetzwerkzeug (3) eine mit der Vorschubeinrichtung (17) betätigbare Dreharretierung (21) zwischen dem Stopfenmagazin (12) und der Stopfenaufnahme (19), insbesondere einem Aufnahmekopf (26,27) aufweist.

10. Stopfensetzwerkzeug nach einem der vorhergehenden Ansprüche, **dadurch gekennzeichnet, dass** das Stopfensetzwerkzeug (3) eine Ladeeinrichtung (22) für das Stopfenmagazin (12) aufweist.

11. Stopfensetzwerkzeug nach Anspruch 10, **dadurch gekennzeichnet, dass** die Ladeeinrichtung (22) einen auf das Stopfenmagazin (12) einwirkenden, insbesondere einführbaren, beweglichen Ladestößel (48) mit einer Führung (49), insbesondere einem Schlitten, und mit einem Antrieb (25) aufweist, wobei das Stopfenmagazin (12) einen bevorzugt zylindrischen Stopfenbehälter (13) zur Aufnahme einer Stopfenreihe (45) aufweist, wobei der Stopfenbehälter (13) offene Stirnseiten und im Behältermantel (41) einen axialen, endseitig offenen Schlitz (42) für die Ladeeinrichtung (22), insbesondere den Ladestößel (48), aufweist.

12. Stopfensetzwerkzeug nach einem der vorhergehenden Ansprüche, **dadurch gekennzeichnet, dass** die Antriebe (23,24,25) als elektrische, steuerbare und ggf. regelbare Antriebe ausgebildet sind.

13. Stopfensetzeinrichtung zum automatischen Setzen von Stopfen (5) an Werkstücken (6), insbesondere Karosserieteilen, wobei die Stopfensetzeinrichtung (1) einen mehrachsigen Industrieroboter (2) mit einem Stopfensetzwerkzeug (3) aufweist, **dadurch gekennzeichnet, dass** das Stopfensetzwerkzeug (3) nach mindestens einem der Ansprüche 1 bis 12 ausgebildet ist und der Industrieroboter (2) bevorzugt als taktiler Roboter mit einer Belastungen aufnehmenden Sensorik (9) ausgebildet ist.

14. Verfahren zum automatischen Setzen von Stopfen (5) an Werkstücken (6), insbesondere Karosserieteilen, mit einem Stopfensetzwerkzeug (3), welches von einem mehrachsigen programmierbaren Industrieroboter (2) geführt wird und ein Stopfenmagazin (12) sowie eine Setzeinheit (18) mit einer Stopfenaufnahme (19) und einer Dreheinrichtung (20) zur Verstellung der Stopfenaufnahme (19) zwischen einer Ladestellung (40) am Stopfenmagazin (12) und einer Setzstellung (39) aufweist, **dadurch gekennzeichnet, dass** die Vorschubbewegung und die Kraft zum Setzen eines Stopfens (5) vom Industrieroboter aufgebracht wird, wobei die Stopfenaufnahme (19) einen oder mehrere mit der Dreheinrichtung (20) verbundene Aufnahmeköpfe (26,27) mit jeweils einem Setzstößel (28) und einem Stopfenköcher (29) zur Aufnahme eines einzelnen Stopfens (5) aufweist, wobei der Setzstößel (28) in seiner Axialrichtung gestellfest abgestützt und der Stopfenköcher (29) relativ zum Setzstößel (28) axial ausweichfähig gelagert ist.

15. Verfahren nach Anspruch 14, **dadurch gekennzeichnet, dass** der Industrieroboter (2) als taktiler Roboter mit einer Belastungen aufnehmenden Sensorik (9) ausgebildet ist, wobei der taktile Industrieroboter (2) zum Suchen der Werkstücköffnung und zum Ausrichten des Stopfensetzwerkzeugs (3) benutzt wird und/oder der Stopfensetzprozess durch eine Überwachung der Vorschubpositionen und der Kräfte gesteuert und kontrolliert wird und/oder durch eine Überwachung der Vorschubpositionen und der Kräfte die Prozessergebnisse und die erreichten Qualität verifiziert werden.

## Claims

1. Robot-guided tool (3) for automatically setting plugs (5) on workpieces (6), in particular vehicle body parts, wherein the plug setting tool (3) has a frame (10) with a port (11) for an industrial robot (2), a plug magazine (12) and a setting unit (18) with a plug receptacle (19) and a rotary device (20) for adjusting the plug receptacle (19) between a loading position (40) at the plug magazine (12) and a setting position (39), **characterized in that** the plug receptacle (19) has one or more receiving heads (26, 27) connected to the rotary device (20), each with a setting ram (28) and a plug quiver (29) for receiving an individual plug (5), wherein the setting ram (28) is supported fixedly on the frame in its axial direction and the plug quiver (29) is mounted so as to be able to yield axially relative to the setting ram (28).

2. Plug setting tool according to Claim 1, **characterized in that** the setting ram(s) (28) is/are oriented transversely, in particular radially, with respect to the axis of rotation of the rotary device (20) and is/are supported on the rotary device (20).

3. Plug setting tool according to Claims 1 or 2, **characterized in that** the plug receptacle (19) has a control and limiting device (38) for the axial movement of the plug quiver(s) (28) in the setting and loading positions (39, 40).

4. Plug setting tool according to Claim 1, 2 or 3, **characterized in that** each particular plug quiver (28) has a plug holder (32) at the front quiver edge (30).

5. Plug setting tool according to Claim 4, **characterized in that** the plug holder (32) is subdivided, in particular when configured as a radially undercut receiving slot, into a plurality of separate and circumferentially spaced-apart holding portions (33).

6. Plug setting tool according to one of the preceding claims, **characterized in that** each particular plug quiver (28) is mounted in an axially displaceable manner on its setting ram (28) and is acted upon by a restoring element (37).

7. Plug setting tool according to one of the preceding claims, **characterized in that** the plug setting tool (3) has a magazine receptacle (15) for releasably receiving a plug magazine (12).

8. Plug setting tool according to one of the preceding claims, **characterized in that** the plug setting tool (3) has a feed device (17) for an axial relative movement between the plug receptacle (19) and the plug magazine (12).

9. Plug setting tool according to Claim 8, **characterized in that** the plug setting tool (3) has a rotation lock (21), actuable with the feed device (17), between the plug magazine (12) and the plug receptacle (19), in particular a receiving head (26, 27).

10. Plug setting tool according to one of the preceding claims, **characterized in that** the plug setting tool (3) has a loading device (22) for the plug magazine (12).

11. Plug setting tool according to Claim 10, **characterized in that** the loading device (22) has a movable loading ram (48) that acts on the plug magazine (12), in particular is introducible, with a guide (49), in particular a slide, and with a drive (25), wherein the plug magazine (12) has a preferably cylindrical plug container (13) for receiving a set (45) of plugs, wherein the plug container (13) has open end sides and, in the container casing (41), an axial, open-ended slot (42) for the loading device (22), in particular the loading ram (48).

12. Plug setting tool according to one of the preceding claims, **characterized in that** the drives (23, 24, 25) are configured as electric, controllable and optionally regulatable drives.

13. Plug setting device for automatically setting plugs (5) on workpieces (6), in particular vehicle body parts, wherein the plug setting device (1) has a multiaxial industrial robot (2) having a plug setting tool (3), **characterized in that** the plug setting tool (3) is configured in accordance with at least one of Claims 1 to 12 and the industrial robot (2) is configured preferably as a tactile robot having a sensor system (9) that senses loads.

14. Method for automatically setting plugs (5) on workpieces (6), in particular vehicle body parts, with a plug setting tool (3) which is guided by a multiaxial programmable industrial robot (2) and has a plug magazine (12) and a setting unit (18) with a plug receptacle (19) and a rotary device (20) for adjusting the plug receptacle (19) between a loading position (40) at the plug magazine (12) and a setting position (39), **characterized in that** the feed movement and the force for setting a plug (5) are applied by the industrial robot, wherein the plug receptacle (19) has one or more receiving heads (26, 27), connected to the rotary device (20), each with a setting ram (28) and a plug quiver (29) for receiving an individual plug (5), wherein the setting ram (28) is supported fixedly on the frame in its axial direction and the plug quiver (29) is mounted so as to be able to yield axially relative to the setting ram (28).

15. Method according to Claim 14, **characterized in that** the industrial robot (2) is configured as a tactile robot having a sensor system (9) that senses loads, wherein the tactile industrial robot (2) is used to find the opening in the workpiece and orient the plug setting tool (3) and/or the plug setting process is controlled and checked by monitoring the feed positions and the forces and/or the process results and the achieved quality are verified by monitoring the feed positions and the forces.

## Revendications

1. Outil (3) guidé par robot, pour la pose automatique de bouchons (5) sur des pièces (6), en particulier des pièces de carrosserie, l'outil (3) de pose de bouchons présentant
un bâti (10) doté d'un raccordement (11) à un robot industriel (2),
un magasin (12) à bouchons et une unité de pose (18) qui présente un logement (19) à bouchons et un dispositif rotatif (20) qui déplace le logement (19) à bouchons entre une position de chargement (40) sur le magasin (12) à bouchons et une position de pose (39), **caractérisé en ce que**
le logement (19) à bouchons présente une ou plusieurs têtes de réception (26, 27) reliées au dispositif de rotation (20), et présentant chacune un poussoir (28) de pose et un carquois (29) à bouchons qui reprend les bouchons (5) un à un, le poussoir de pose (28) s'appuyant solidairement sur le bâti dans sa direction axiale et le carquois (29) à bouchons étant monté de manière à pouvoir se déformer axialement par rapport au pousse-bouchons (28).

2. Outil de pose de bouchons selon la revendication 1, **caractérisé en ce que** le ou les pousse-bouchons (28) sont alignés transversalement et en particulier radialement par rapport à l'axe de rotation du dispositif rotatif (20) et sont soutenus sur le dispositif rotatif (20).

3. Outil de pose de bouchons selon les revendications 1 ou 2, **caractérisé en ce que** le logement (19) à bouchons présente un dispositif (38) de commande et de limitation du déplacement axial du ou des carquois (28) à bouchons dans la position de pose et dans la position de chargement (39, 40).

4. Outil de pose de bouchons selon les revendications 1, 2 ou 3, **caractérisé en ce que** chaque carquois (28) à bouchons présente un porte-bouchons (32) sur le bord avant (30) du carquois.

5. Outil de pose de bouchons selon la revendication 4, **caractérisé en ce que** le porte-bouchons (32), en particulier lorsqu'il est configuré comme rainure de réception en contre-dépouille, est divisé en plusieurs sections de maintien (33) séparées et maintenues à distance dans la direction périphérique.

6. Outil de pose de bouchons selon l'une des revendications précédentes, **caractérisé en ce que** chaque carquois (28) à bouchons est monté à coulissement axial sur son pousse-bouchon (28) et est sollicité par un élément de rappel (37).

7. Outil de pose de bouchons selon l'une des revendications précédentes, **caractérisé en ce que** l'outil (3) de pose de bouchons présente un logement (15) de magasin qui reprend de manière libérable un magasin (12) à bouchons.

8. Outil de pose de bouchons selon l'une des revendications précédentes, **caractérisé en ce que** l'outil (3) de pose de bouchons présente un dispositif d'avancement (17) permettant un déplacement axial relatif entre le logement (19) à bouchons et le magasin (12) à bouchons.

9. Outil de pose de bouchons selon la revendication 8, **caractérisé en ce que** l'outil (3) de pose de bouchons présente un blocage (21) en rotation qui peut être actionné par le dispositif d'avancement (17) et disposé entre le magasin (12) à bouchons et le logement (19) à bouchons, en particulier une tête de réception (26, 27).

10. Outil de pose de bouchons selon l'une des revendications précédentes, **caractérisé en ce que** l'outil (3) de pose de bouchons présente un dispositif (22) de chargement du magasin (12) à bouchons.

11. Outil de pose de bouchons selon la revendication 10, **caractérisé en ce que** le dispositif de chargement (22) présente un pousse-bouchon (48) mobile, agissant sur le magasin (12) à bouchons et en particulier apte à y être inséré, et présentant un guide (49), en particulier un coulisseau, ainsi qu'un entraînement (25), le magasin (12) à bouchons présentant un récipient (13) à bouchons de préférence cylindrique qui reprend une série (45) de bouchons, le récipient (13) à bouchons présentant pour le dispositif de chargement (22) et en particulier le poussoir de chargement (48) des côtés frontaux ouverts et dans l'enveloppe (41) du récipient, une fente axiale (42) ouverte à une extrémité.

12. Outil de pose de bouchons selon l'une des revendications précédentes, **caractérisé en ce que** les entraînements (23, 24, 25) sont configurés comme entraînements électriques, asservis et éventuellement régulés.

13. Dispositif de pose de bouchons posant de manière automatique des bouchons (5) sur des pièces (6), en particulier des pièces de carrosserie, le dispositif (1) de pose de bouchons présentant un robot industriel multiaxe (2) doté d'un outil (3) de pose de bouchons,
**caractérisé en ce que**
l'outil (3) de pose de bouchons est configuré selon au moins l'une des revendications 1 à 12 et **en ce que** le robot industriel (2) est de préférence configuré comme robot tactile doté d'un ensemble (9) de capteurs reprenant des sollicitations.

14. Procédé de pose automatique de bouchons (5) sur des pièces (6), en particulier sur des pièces de carrosserie, à l'aide d'un outil (3) de pose de bouchons qui est guidé par un robot industriel multiaxe programmable (2) et qui présente un magasin (12) à bouchons, une unité de pose (18) qui présente un logement (19) à bouchons et un dispositif rotatif (20) qui déplace le logement (19) à bouchons entre une position de chargement (40) sur le magasin (12) à bouchons et une position de pose (39),
**caractérisé en ce que**
le déplacement d'avancement et la force nécessaire pour le placement d'un bouchon (5) sont appliqués par le robot industriel et
**en ce que** le logement (19) à bouchons présente une ou plusieurs têtes de réception (26, 27) reliées au dispositif de rotation (20) et présentant chacune un poussoir (28) de pose et un carquois (29) à bouchons qui reprend les bouchons (5) un à un, le poussoir de pose (28) s'appuyant solidairement sur le bâti dans sa direction axiale et le carquois (29) à bouchons étant monté de manière à pouvoir se déformer axialement par rapport au pousse-bouchons (28).

15. Procédé selon la revendication 14, **caractérisé en ce que** le robot industriel (2) est configuré comme robot tactile présentant un ensemble (9) de capteurs qui reprennent les sollicitations, le robot industriel tactile (2) étant utilisé pour rechercher l'ouverture dans la pièce et pour orienter l'outil (3) de pose de bouchons et/ou **en ce que** le processus de pose de bouchons est commandé et contrôlé par surveillance des positions d'avancement et des forces, et/ou **en ce que** les résultats de l'opération et la qualité atteinte sont vérifiés par la surveillance des positions d'avancement et des forces.
